# EUROPEAN PATENT APPLICATION

(11) **EP 1 563 738 A1**
(43) Date of publication of application: **17.08.2005**
(21) Application number: 04447039.1
(22) Date of filing: 13.02.2004
(51) Int. Cl.: A21D 13/08, A23L 1/00, A23L 1/0524

(54) **Cold gelling pastry glaze based on pectin**

(71) Applicant: Puratos Naamloze Vennootschap, 1702 Groot-Bijgaarden (BE)
(72) Inventor: Chevalier, Olivier, 7800 ATH (BE); Naudts, Isabelle, 1750 St. Kwintens-Lennik (BE); Soyeur, Jean-Luc, 7850 Enghien (BE)
(74) Representative: Van Malderen, Joelle

(57) **Abstract**

The present invention relates to liquid or semi-liquid pastry glaze, gelling on contact with a support, in particular to cold gelling pastry glazes obtained by solubilizing a Ca²⁺ reactive pectin and by applying conditions of brix, pH and/or suboptimal Ca⁺² levels or other jollification ions that do not allow gelling before application onto a food product that provides the extra amount of e.g. Ca⁺² ions and/or other conditions needed for jellification. The glaze solutions of the invention typically have a brix of about 35° to about 55°, an acid pH (for instance a pH below 4) and/or a natural free Ca²⁺ level of about 15 ppm.

The present invention further relates to the use of such pastry glazes on food products such as pastry, which will retain an excellent cut-ability and texture. The glazes according to the invention advantageously are ready-to-use glazes that can be applied with precision, that are cold gelling but do not have the disadvantages of a standard thixotropic glaze. They are highly suited for glazing of acid food products such as a fruit tart.

## Description

### Field of the invention

The present invention relates to cold gelling pastry glazes, to their preparation and their use.

### Background

Pastry glazes are jelly solutions that are applied on pastry products such as fruit pies, viennoiseries, danishes... with the purpose of making them shine, protecting them from the air, adding a flavored layer etc.

Originally, these glazes were prepared by the baker himself from fruit purees, sugar and water. They are now manufactured from sugars (such as saccharose, glucose, ..) , water, fruits (such as fruit purées, fruit juices or extracts) and gelling agents (such as pectins, carrageenans, ...), acid, salts, preservatives etc.

Three main types of glazes are currently present on the market:
- Thermoreversible concentrated glazes,
- Thermoreversible ready-to-use sprayable glazes, and
- Cold use thixotropic glazes.

Concentrated glazes are the most traditional ones. They have a brix of about 60° to about 70° and a pH < 4. A brix of about 60° to about 70° means that these glazes contain about 50% to about 75% soluble solid.

Concentrated glazes have to be diluted with water (from 10 % to maximally 100 % of the weight of the glaze) before use. They are thermoreversible. This means that they are liquid at higher temperatures (typically > 60°C) and become solid at lower temperatures (typically < 50°C). The temperature cycle of liquefying and solidifying is repeatable indefinitely.

Below a classical composition of such a concentrated glaze is given (Table 1):

**Table 1**

| **Component** | **Amount(%)** |
|---|---|
| Water | 33.566 |
| Sugar | 45.79 |
| Glucose syrup | 18.13 |
| Citric acid (sol. 50% w/w) | 0.95 |
| Tri-sodium citrate | 0.095 |
| K-Sorbate (sol. 33% w/w) | 0.3 |
| CaCl₂ dihydrate | 0.019 |
| Pectin (28 D.M.; 22 D.A.) | 1.15 |
| Brix: 65 % | |
| pH: 3.5 | |
| D.M.: degree of methoxylation | |
| D.A.: degree of amidation | |

The above glazes contain pectin and other gelling and/or viscosifying agents.

Pectin is the most common choice of gelling agent for the manufacture of glazes, for several reasons. First, it is naturally present in fruits and thus in fruit purées which are used to prepare these glazes. Second, pectin can provide the desired thermoreversibility of the system. Third, the use of pectin is compatible with an acid product like a glaze, which typically has a pH below 4.

Pectin molecules are comprised of linear chains containing 200 to 1000 D-galacturonic acid units linked together by alpha-1,4-glycosidic bonds. Some of the galacturonic acid units in the molecule are esterified and are thus present in the form of a galacturonic acid methyl ester. The degree of esterification (D.E.) is defined as the ratio of esterified galacturonic acid units to the total of galacturonic acid units present in a molecule. Commercial pectins are divided in high ester (HM, high methoxylation) and low ester (LM, low methoxylation) pectins. In the present context, "esterification" is thus a synonym for "methoxylation".

High ester pectins are pectins with a ratio of esterification > 50%. HM pectins jellify only in high brix systems (brix > 55°) and low pH (pH around 3). High brix systems favorize the formation of hydrophobic junction zones while H⁺ neutralizes the (negatively charged) pectin molecules, thereby decreasing any repulsion forces existing between them. The gels obtained are thermostable, in the sense that they don't melt completely upon heating.

Low ester pectins are pectins with a ratio of esterification < 50%. They are obtained by mild acidic or alkaline treatment of HM pectins. If ammonia is used in an alkaline de-esterification process, the pectin will be amidated resulting in an amidated low ester pectin. The degree of amidation (D.A.) is defined as the ratio of amidated galacturonic groups to the total amount of galacturonic units. In Europe the amidation level is restricted by law to a maximum of 25 %.

The gelling mechanism of LM pectins differs from that of HM pectins. Whereas the brix and the pH remain important factors in the gelling mechanism, calcium ions (Ca²⁺) and other divalent or monovalent ions now also play a crucial role in this mechanism. The lower the D.M., the higher is the Ca²⁺ reactivity. The higher the D.A., the higher is the Ca²⁺ reactivity. Low ester pectins can form gels at lower brix and higher pH than high ester pectins. The gels obtained can often be completely remelted upon heating, id est they are thermoreversible gels in contrast to gels obtained with high ester pectins (see above).

When working with pectins, the brix and especially the pH have to be precisely controlled: brix +/- 1°, pH +/- 0.1 pH unit.

Table 2 below gives an idea of the amount of Ca²⁺ (expressed in mg Ca²⁺/g of pectin), needed to jellify low D.M. - high D.A. pectins in function of the brix of the system.

**Table 2**

| **D.M. / D.A.** | **62° brix** | **50° brix** | **30° brix** |
|---|---|---|---|
| **25 / 21** | 0 - 5 | 5 - 7.5 | 18 |
| **32 / 18** | 5 | 12.5 | 30 |
| **37 / 15** | 7.5 | 18 - 20 | 45 |
| D.M.: degree of methoxylation | | | |
| D.A.: degree of amidation | | | |

Pectin being the first choice of gelling agent for making a glaze, other gelling agents can be used for their thermoreversibility and/or thixotropic properties.

The most common gelling agents that are used in a glaze, after pectins, are carrageenans. The latter are extracted from red seaweeds and can be divided in 3 main groups: kappa, iota and lambda carrageenans.

Kappa carrageenans give rise to brittle thermoreversible gels. The gel formation is induced by ions: K⁺ > Ca²⁺ > Na⁺, with potassium ions having the biggest influence, then calcium and finally sodium ions. Kappa carrageenans are considered second choice for glaze manufacturing because they are not naturally present in fruits, provide generally less shiny glazes, because the mouthfeel of the gels obtained therewith is not very pleasant and finally because they are quite sensitive to hydrolysis (which implies that they can be more easily destroyed during use).

Iota carrageenans give rise to thixotropic gels, which are also induced by cations: Ca²⁺ > K⁺ > Na⁺, with calcium ions having the biggest influence in this case, then potassium and then sodium ions.

Lambda carrageenans do not jellify and only provide viscous solutions.

Another gelling agent that may be used is agar. Agar is a red-purple seaweed extract. It also forms thermoreversible gels with a wide difference between the melting and gelling temperature. Cations have no influence on its gelling properties. Agar gives rise to a gel with a soft spreadable texture.

Alginates are also used in the glaze manufacturing industry. Despite the fact that they are considered as gelling agent, they are not used as such. As a matter of fact, they form thermostable gels with Ca²⁺ ions. In the absence of Ca²⁺ they act as a simple viscosifier. They can as such be used in combination with low DE pectins. Alginates, however, can form thermoreversible gels with high DM pectins.

Viscosifying agents differ from a gelling agent by the fact that, when dissolved in water, they increase the viscosity of the solution without setting and without forming a gel. The solution remains liquid.

The most commonly used viscosifying agents include but are not limited to guar gum, locust bean gum, xanthan gum, modified cellulose, arabic gum, ...

Their viscosity profile is function of the temperature. In general, the viscosity will decrease when the temperature increases.

Viscosifying agents are sometimes used in glazes to provide sufficient viscosity to the glaze in its liquid form in order to allow it to stay on the product before the jellification occurs. Combinations of gelling agents (such as pectins or carrageenans) and viscosifying agents can also lead to a different texture. Furthermore, in some cases synergistic effects have been observed (for instance when carrageenans are used with locust bean gum; xanthan gum is used with locust bean gum; high DM pectins are used with alginate; and xanthan is used with guar gum).

When used by the baker, traditional concentrated glazes are heated in a pan above 80°C. At this temperature, the glaze is dissolved. The solution is then applied for instance with a brush on the product. While cooling down, the solution will gellify and set on the product. After setting, the glazed pastry products such as tarts can be cut easily since the glaze is gelled and cut-able. Those glazes are the most traditional ones but have a series of disadvantages. First of all, they have to be diluted. This operation involves a weighing (of the glaze and the water) plus stirring to disperse the glaze. Second, they have to be warmed up to minimally 80°C. Certain glazes are difficult to melt. It can take a long time to melt the gels and the gels can get burnt in the pan. The utilization autonomy is quite short since the traditional gel can be used only while it is still liquid. If the total of the glaze is not used by the baker before jellification, he has to re-heat it to redissolve the gel before using it again. This leads to water evaporation and/or texture difference of the glaze afterwards. Fruits (especially strawberries, raspberries and the like) can also get damaged by the application of a warm solution on them.

Ready-to-use sprayable glazes are the second generation of glazes. They are derived from the concentrated ones, but they are applied with a spray machine as such since they are already diluted to a brix of about 45°-50°.

Low DM - high DA pectins and/or carrageenans once more are the most common gelling agents used for the manufacture of ready-to-use thermoreversible glazes. Once again, viscosifying agents can be used in combination with gelling agents to stabilize the product but in this case. It is important that the product is liquid enough at higher temperatures (> 60°C) to assure a good sprayability.

Also here, a strict control of the brix and the pH of the glaze are needed to guarantee a proper functioning

Ready-to-use sprayable glazes are pumped into a spray machine through for instance a spiral circulating in a water bath at a temperature of 60°C - 90°C. At this temperature, they appear as a thin liquid. After spraying, the temperature drops very quickly, below the setting temperature of the glaze, allowing the glaze to gel on the tart. It also forms cuttable gels, allowing an easy division of the product in portions without any flowing down problems of the glazes. Those glazes are easier to use than the concentrated ones because they don't need to be diluted and prepared in a pan. Nevertheless, they also have the disadvantages linked to their thermoreversibility. The utilisation temperature is crucial. A good control, usage and maintenance of the spray machine are further important to obtain a good result. It is not possible to be very precise. The spraying surface of the gun being quite wide, it is almost impossible to glaze only parts of the tart without spraying around it (for example to glaze only the fruits decorating a cream cake without glazing the cream).

An other big disadvantage of the thermoreversible glazes (both concentrated or ready-to-use glazes) is the risk of burning of the baker or the worker using it.

Thixotropic glazes, which do not require heating to be used, already exist on the market. They appear as light gels, easily breakable upon stirring. Their brix is normally > 55° and their pH < 4. A strict control of brix and pH is also here necessary to guarantee the functionality.

After stirring, thixotropic glazes are liquid enough to be applied on the food products. After application and in the absence of stirring, they rebuild their viscosity so that they can stay on the product. Nevertheless, they never gel so much that they are well cut-able. They always remain viscous jellies, turning wet if touched with a finger. Those glazes are thus ideal for application on the top of bavarois but are not suitable for use on fruits tarts, viennoiseries, danishes, cakes,...

International patent application WO 01/74176 relates to thixotropic shear thinning compositions that after shear thinning are liquid when added to a food product. The compositions form a gel only when incorporated into an uncooked food product like meat, poultry or sea fish. These gel-in-place compositions are added to the food products to produce food products with reduced liquid seepage. The disclosed gels comprise a mixture of a gellable polysaccharide and at least one gelling cation in an amount to form a thixotropic gel.

### Aims of the invention

The present invention aims to provide a glaze product which combines the advantages of the three pre-cited glazes, the thermoreversible concentrated, the thermoreversible ready-to-use and the cold thixotropic glaze.

Like the concentrated glaze, the glaze of the present invention should be applicable with a brush, allowing glazing of food products with precision such that it is possible to glaze only defined parts of the tarts. Like the sprayable glaze, the product should be ready to use. Like the thixotropic glaze, the product should not require heating, but unlike the other thixotropic glaze and like a thermoreversible glaze, the glaze according to the invention should set and form a cut-able gel after being applied on the tart. After jellification or gelling, the gel or glaze of the present invention should behave like a solid, should be easily cut-able, showing a perfect cut. With such characteristics, the glaze is designed for use on all types of pastry products including but not limited to fruits tarts, viennoiseries, cakes, ...

### Summary of the invention

The present invention relates to a liquid or semi-liquid pastry glaze that is gelling on contact with a support. The present invention relates to a gelling glaze or glaze product which is obtained or obtainable by using or solubilizing a Ca²⁺ reactive pectin: a low methoxylated or a low methoxylated-amidated pectin (see infra). The applied conditions (brix, pH and/or amount of Ca²⁺ or other gelling agents added) of the glaze solution are such that they are insufficient for jellification of the glaze prior to application. Preferably no extra Ca²⁺ is added to this glaze solution, or the amount of Ca²⁺ added is too low to allow setting of the gel at these suboptimal pH and/or brix conditions. In a preferred embodiment of the invention, the ingredients of the glaze will have a natural free Ca²⁺ level of about 0 to 50 ppm (up to about 50 ppm), preferably about 15 ppm. The amount of calcium present can also be controlled by complexing agents such as phosphates and citrates. It is known that Ca-reactive pectins are also reactive to other ions than Ca⁺².

The above combination allows preservation of a semi-liquid texture of the glaze before utilization and the jellification of the glaze after application only. After application on a food product, more ions (Ca²⁺, H⁺, K⁺, ...) become available (by transfer between the food product support and the glaze) to the pectin, allowing jellification of the glaze product. The extra amount of Ca²⁺ needed for jellification is thus provided by the food product support. The food support may also change pH and/or other conditions that favor gelling of the glaze.

Besides the Ca²⁺ reactive pectin, other gelling agents and/or viscosifying agents may be added to the glaze solution or composition. Such gelling agents include but are not limited to other types of pectins, carrageenans, gellan gum, agar, alginates or the like. Suitable viscosifying agents include but are not limited to guar gum, locust bean gum, xanthan gum, modified cellulose, arabic gum, .... The glaze composition may further comprise a flavor.

In an embodiment of the invention, the glazes of the invention have a brix of about 30° to about 60°, preferably of about 35° to about 55° and/or have an acid pH of less of 4.5 and preferably a pH below 4.

Advantageously, the glaze of the invention is a cold gelling glaze which means that gelling at ambient and refrigeration, id est at temperatures of below 35 °C, preferably about 4°C to about 20°C, is possible.

In a preferred embodiment according to the invention, the Ca²⁺ reactive pectin is a low methoxylated (LM) and/or a low methoxylated-amidated pectin. Such pectins have a methoxylation degree that is lower than 50% and have an amidation degree that is between 0 and 30%, preferably between 0 and 25%. The latter are referred to as low methoxylated-amidated pectins (D.M. <50, D.A. up to 30 (but not 0)).

Before application, the glaze will not set and gel. This will occur only after contact with a support, for instance for about 5 minutes to several hours (up to 24 hours), typically between 0.5 and 2 hours. This in-situ-gelling only is thought to be due to an ion transfer (Ca²⁺, Mg²⁺ H⁺, K⁺, Na⁺,...) between the support and the glaze or in in dry conditions due to a concentration of the ions by evaporation.

The support or food product support that evokes this response - id est contains the necessary gelling ions - may be comprised of fruits such as apricots, pineapple, pears, kiwis, oranges etc with which tarts and other types of pastry are decorated. Also bakery cream, and other types of supports used in pastry can provide the same effect.

In contact with a suitable support such as apricots, the firmness of the cold gelling glaze according to the invention is at least multiplied by factor 2, 3, 4, 5, 10 or 20 after a minimal time of contact, for instance one or several hours (up to 24 hours) of contact with the support.

When lower Ca²⁺ reactive pectins are used, added Ca²⁺ and/or a higher brix and/or a lower pH is most often necessary. For instance, up to about 50 ppm of Ca²⁺ might have to be added to the glaze composition, preferably in the form of CaCl₂, to get a similar product. The most important characteristic is that the product does not gel without contact with a substrate. Other ions than calcium (Na⁺, K⁺, Mg⁺⁺ and H⁺) can be used.

As explained supra, the lower the D.M. and/or the higher the D.A. of the pectin, the higher is the Ca²⁺ reactivity. The higher the D.M. of a LM pectin and/or the lower the D.A. of a LM-amidated pectin, the lower thus the Ca²⁺ reactivity. An example of a lower Ca²⁺ reactive pectin and a higher Ca⁺² reactive pectin can be found in Table 3. For instance, when using a 28M-22A pectin no extra Ca⁺² was added to the glaze, whereas a Ca⁺² source was added when using a 36M-14A pectin. The person skilled in the art will know when to add extra gelling ions like Ca⁺², when to raise the brix and/or when to lower the pH to obtain the desired result.

Advantageously, the glaze according to the invention is highly suited for glazing of pastry such as fruit tarts or other pastry products with a low pH.

The food product on which the glaze is applied can be a fruit tart, bavarois, viennoiseries, danishes, cakes,...

Food or pastry products provided with a glaze according to the invention have an excellent cut-ability, the glaze not being prone to flowing down, wetting and/or destabizilization upon cutting and/or upon storage for a few hours to several days.

Advantageously, the glaze according to the invention is ready-to-use, easily sprayable, spreadable or applicable so that it is possible to work precisely and to cover only specific parts of the food product (for instance the fruits) with the glaze, if wanted.

The glazes according to the present invention can be shear thinned but do not need to be shear thinned before application.

The present invention further relates to a production process to prepare the above glazes. This production process comprises at least the steps of solubilizing in water, a Ca²⁺ reactive pectin under conditions (brix, pH, amount of Ca²⁺ or other gelling ions added) that are insufficient for its jellification before contact with the product, to gives rise to a (cold) in-situ gelling glaze with a brix of preferably about 35° to about 55° and an acid pH, preferably a pH below 4.

A preferred production process comprises the following steps:
- Mixing of the glucose syrup with the sugar and salts and the water
- Reach 70-80°C to achieve sugar solubilization,
- Dispersing the pectin used with a high shear mixer,
- Adding the pectin solution to the sugar solution and mix until homogeneous,
- Cooling down to about 60 °C and filling in containers.

The above production process is just an example of the production of a glaze.

### Description of the figures

The figure 1A shows the nice cut-ability of an apricot tart foreseen 24 hours earlier with a cold gelling glaze according to the invention compared to the cut-ability of the same product provided with a cold thixotropic glaze as available on the market (Fig 1B).

The figure 2 presents different views on a mixed fruit tart foreseen with a cold gelling glaze according to the invention, revealing a perfect cut and a nice general texture. A: a cut through the tart revealing a perfect cut. Detailed top (B) and side (C) view.

The figures 3A-E present the evolution in time of the texture (firmness) of a cold gelling glaze (figs. 3A, B, D - time: 0, 24 and 48 hours respectively - max. peaks: 11.8, 19.4 and 28.4 respectively) and of a cold gelling glaze on apricots (figs. 3C, E - time: 24 and 48 hours respectively - max peaks: 118.4 and 139.2 respectively). The control measurement was performed at 25°C whereas all other measurements were done at a temperature of 10°C-12°C.

The figure 4 illustrates how the firmness (in grams) of a cold gelling glaze and a standard thixotropic glaze change in time when in contact with apricots.

The invention will now be described in further details in the following examples and embodiments by reference to the enclosed drawings, which are not in any way intended to limit the scope of the invention as claimed.

### Detailed description of the invention

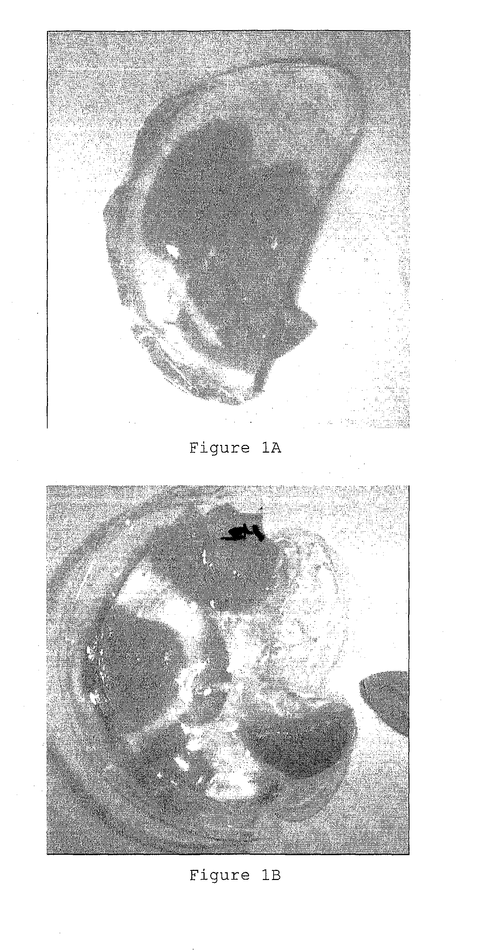

One of the advantages of the glaze of the present invention is the easy use and applicability and the excellent cut-ability of a glazed food product. The nice cut-ability of a product foreseen with a glaze according to the invention is evident from Figure 1. Figure 1A clearly shows the absence of flowing down of such a glaze compared to a standard thixotropic glaze (Fig 1B) and shows a perfect clean cut.

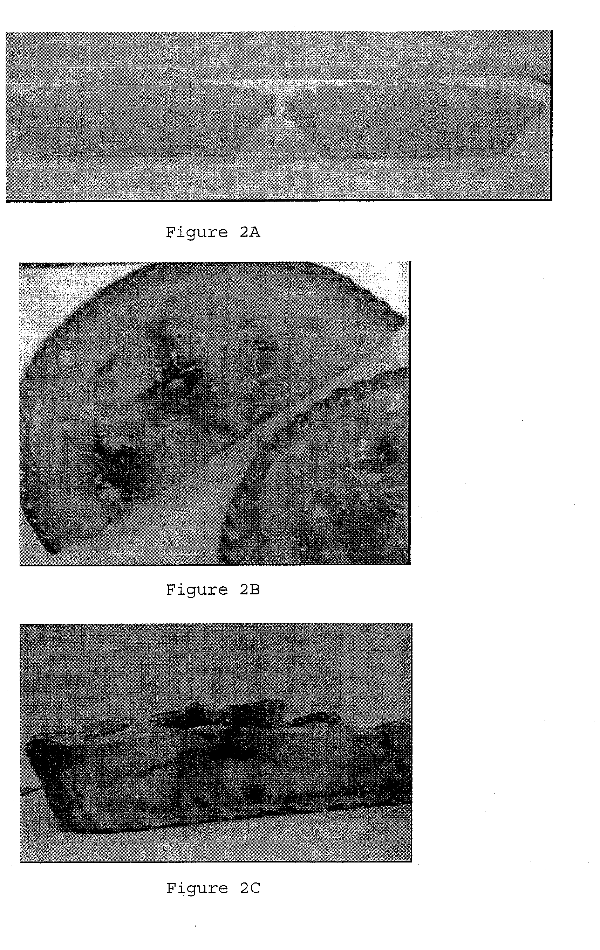

Fruit tarts provided with such a glaze preserve a nice texture and presentation, the glaze not being prone to flowing down, wetting and/or destabizilization (Figs 2A-C).

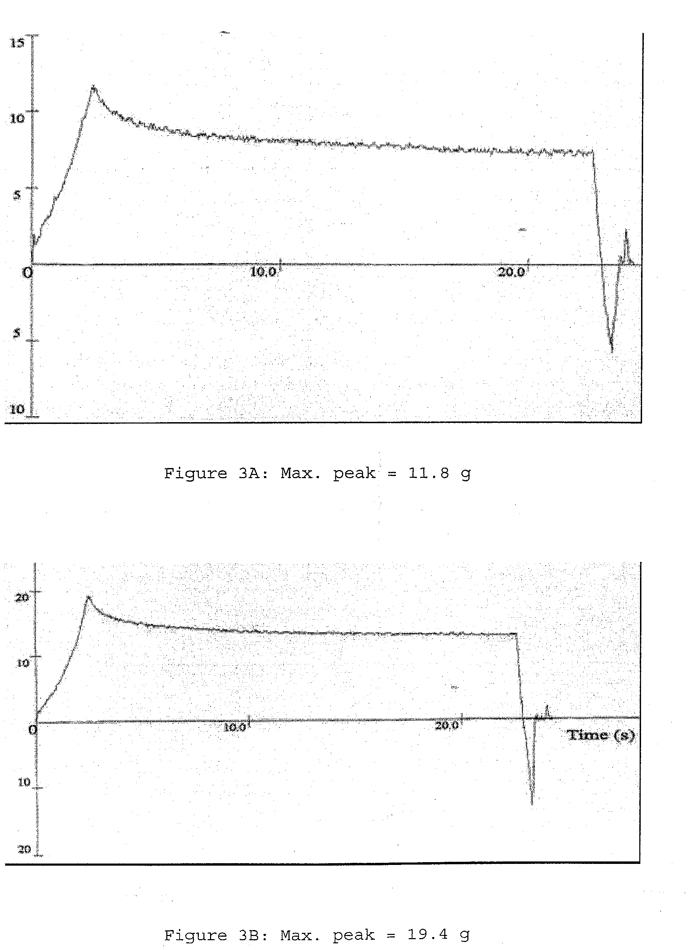

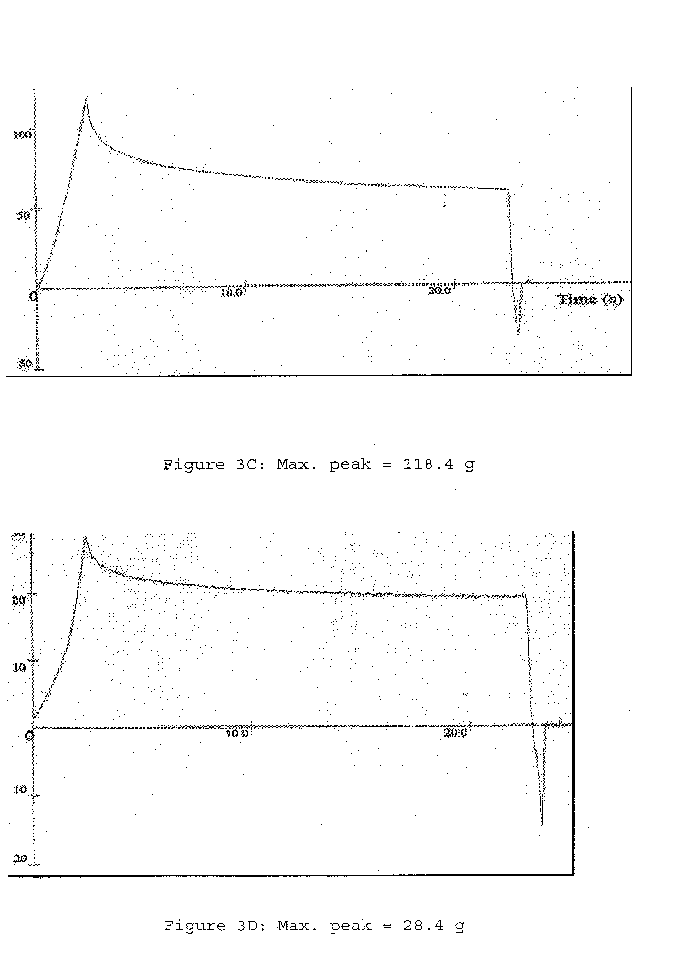

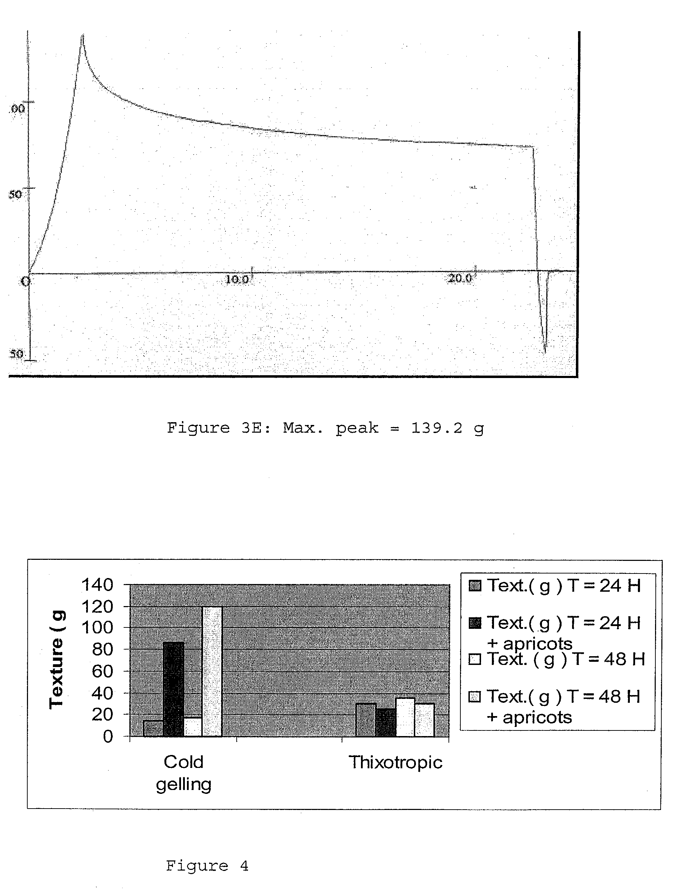

The excellent cut-ability of the glaze can be explained by the evolution of its texture (firmness) after application on the products. To study the texture evolution in time, 120 g of glaze was poured on about 46 to about 48 g of apricots in a plastic beaker and then placed in a fridge. The initial (t=0) firmness was measured at 25°C (Fig. 3A), whereas the firmness after 24 and 48 hours respectively (t = 24 h, t = 48 h) was measured at 10°C-12°C (Figs. 3C and E). The same quantity of glaze poured in a beaker but without apricots, covered and placed in a fridge served as a control (Figs. 3B and D).

The above measurements were done with a texture analyzer (TAXT-2 of Stable Microsystems), probe of 2.54 cm diameter, compression target of 5.0 mm, trigger of 1.0 g, speed of 120 mm/min, hold of 20 sec; and recovery of 0 sec.

The Y-axis of Figures 3 A-E shows the resistance of the gel to penetration (force in grams) as measure for the firmness of the gel. The peak represents hereby the maximum resistance and expresses the force at the compression of 5 mm. At t=0, a maximum peak of 11.8 g was measured for the liquid or semi-liquid pastry glaze. After 48 hours a maximum peak of 28.4 g was registered for the control, whereas for the gel placed on apricots a maximum peak of 139.2 g was registered after a contact time of 48 hours. The increase in firmness of the gel placed on a suitable support like apricots is thus significant.

The difference in gelling capacity and firmness of the gel was remarkable when compared to the behavior of a standard thixotropic gel submitted to the same conditions. For instance, for a standard thixotropic glaze applied on apricots, the maximum peak after 48 hours was 30g only.

The cold gelling glaze of the invention is not jellified at time t = 0, but once in contact with the product (in this case apricots) the texture will evolve towards a firm gel as demonstrated above. This is not obtained without the contact of apricots or another suitable support. This results is probably obtained thanks to an ion transfer (Ca²⁺, Mg²⁺ H⁺, K⁺, Na⁺,...) between the support and the glaze. Other supports which can provide this same effect include but are not limited to fruits such as pineapple, pears, kiwis, orange etc. Also bakery cream, cakes, bread, danish pastry, puffed pastry and other types of supports can provide the same effect.

In contrast thereto, the cold thixotropic glaze shows a jellified texture from the beginning, which evolves very little in time even when in contact with the product. The texture of the gel even becomes slightly less firm after contact with the product.

It should be noticed that in practice a much thinner layer of glaze is applied on the food product so that the jellification will occur already after one hour depending of the support.

Below (Table 3), some possible recipes are given to prepare the cold gelling glaze according to the invention. The scope of the present invention is not limited to these particular recipes, however. Table 3 further summarizes texture (firmness) changes in time of the different glazes.

### Examples

### Example 1: Examples of recipes and texture evolution in time

The total Ca²⁺ level measured in products (recipes) 1 and 2 amounted to about 15 ppm. This Ca²⁺ level comes naturally from the ingredients used in the recipes. For recipes 3 and 4, wherein a pectin is used that is less reactive to calcium, 30 ppm of Ca²⁺ was added in the form of CaCl₂ to get a similar product.

### Example 2: Process used to prepare cold gelling pastry glazes according to the invention

The process used to prepare these glazes according to the invention comprised the following steps:
- Mixing of the glucose syrup with the sugar and salts and the water
- Reaching 70-80°C to achieve sugar solubilization,
- Dispersing the pectin used with a high shear mixer,
- Adding the pectin solution to the sugar solution and mix until homogeneous,
- Cooling down to about 60 °C and filling in containers.

From the examples given in Table 3, the following conclusions can be drawn:

First, it is possible to obtain a cold gelling glaze with a brix of 35° to maximally 60° with the desired properties. At this brix (brix about 60°), the texture doesn't change very much and is even weaker after 48 h than after 24 hours probably due to a too high water transfer of the fruit to the glaze.

Second, in contact with a support such as apricots in this case, the firmness of the cold gelling glaze with brix between about 35° and about 50° is multiplied, preferably multiplied by factor 5. In contrast therewith, the firmness of a thixotropic glaze is almost not influenced by the presence of apricots, becomes even a bit lower in this case (see also figure 4).

Third, it is already possible to obtain cold gelling glazes with a brix of about 35°, which will be quite liquid before application.

Fourth, it is possible to use pectins with a different esterification and amidation degree. With lower Ca²⁺ reactive pectin, added Ca²⁺ and/or a higher brix and/or a lower pH is necessary. The skilled person can adapt these parameters such that the gel in not increasing in firmness without contact with a support.

Finally, it is possible to combine the above pectins with another hydrocolloid.

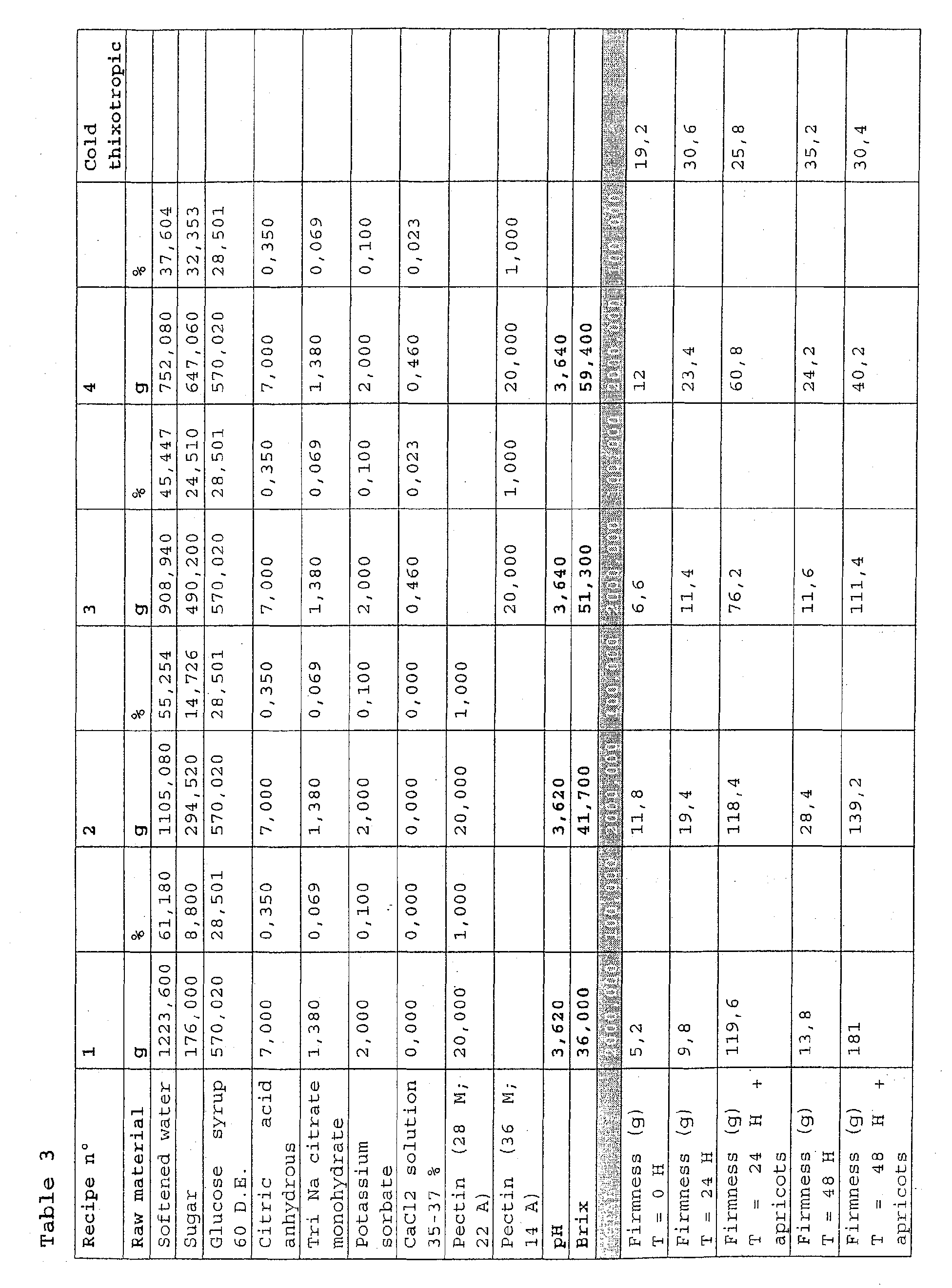

## Claims

1. A liquid or semi-liquid pastry glaze gelling on contact with a support.

2. Pastry glaze obtainable by solubilizing a Ca2+ reactive pectin, the glaze having a brix and/or pH that is insufficient for jellification, with no Ca²⁺ or a suboptimal amount of Ca²⁺ or other ions for jellification being added to said glaze, the glaze having a liquid or semi-liquid texture before utilization and jellifying only when applied onto a food product support that provides the extra amount of Ca²⁺ or other ions for jellification.

3. Glaze according to claim 1 or 2, with a free natural Ca²⁺ level of up to about 50 ppm, preferably about 15 ppm.

4. Glaze according to any of the preceding claims, which has a brix of about 30° to about 60° and an acid pH.

5. Glaze according to claim 4 with a brix of about 35° and about 55° and/or a pH below 4.

6. Glaze according to any of the preceding claims, which is a cold gelling glaze.

7. Glaze according to any of the preceding claims, wherein the Ca²⁺ reactive pectin is a low methoxylated pectin and/or a low methoxylated-amidated pectin.

8. Glaze according to any of the preceding claims, wherein the Ca²⁺ reactive pectin has a methoxylation degree lower than 50%.

9. Glaze according to any of the preceding claims, whereby the firmness of the cold gelling glaze according to the invention is at least multiplied by factor 2 after contact with the food product support.

10. Glaze according to any of the preceding claims, whereby said support is selected from the list consisting of bakery cream, cakes, bread, danish pastry, puffed pastry and fruits and/or any combination thereof.

11. Glaze according to claim 10, whereby fruits are selected from the list consisting of apricots, pineapple, pears, kiwis and oranges

12. Glaze according to any of the preceding claims, further comprising another gelling agent and/or a viscosifier.

13. Glaze according to claim 12, wherein the other gelling agent is selected from the group consisting of other pectins, gellan gum, carrageenans, agar and alginates.

14. Glaze according to claim 12 or 13, wherein the viscosifier is selected from the group consisting of guar gum, locust bean gum, xanthan gum, modified cellulose and arabic gum.

15. Glaze according to any of the preceding claims, wherein CaCl₂ is added to the initial glaze solution when a lower Ca²⁺ reactive pectin is used.

16. Use of the glaze according to any of the preceding claims for glazing of a food product.

17. A food product that is glazed with a glaze according to any of claims 1 to 15.

18. Food product according to claim 17 selected from the group consisting of a tart or pastry decorated with bakery cream, a fruit tart, a cake, viennoiseries, danishes and bavarois.
